# EUROPÄISCHE PATENTSCHRIFT

(11) **EP 3 104 035 B1**
(45) Veröffentlichungstag und Bekanntmachung des Hinweises auf die Patenterteilung: **28.08.2019**
(21) Anmeldenummer: 16173649.1
(22) Anmeldetag: 25.05.2011
(51) Int. Cl.: F16D 55/228, F16D 65/092, F16D 65/097

(54) **BREMSBELAG FÜR EINE FESTSATTELBREMSE**
BRAKE PAD FOR A FIXED CALIPER BRAKE
GARNITURE DE FREIN POUR FREINS A ETRIER

(30) Priorität: 02.06.2010 DE 102010029679; 15.11.2010 DE 102010043898
(43) Veröffentlichungstag der Anmeldung: 14.12.2016
(62) Teilanmeldung aus: 11721326.4
(73) Patentinhaber: Continental Teves AG & Co. OHG, 60488 Frankfurt am Main (DE)
(72) Erfinder: Freund, Verena, 63486 Bruchköbel (DE); Kristen, Dieter, 63303 Dreieich (DE); Paschke, Klaus-Dieter, 65719 Hofheim (DE); Rehm, Joachim, 65931 Frankfurt am Main (DE)

(56) Entgegenhaltungen:
- WO-A1-92/17713
- WO-A1-94/24454
- DE-A1- 4 133 486
- DE-A1-102006 052 178
- US-A- 5 297 659

## Beschreibung

Die Erfindung betrifft einen Bremsbelag für eine Festsattelbremse.

Festsattelbremsen umfassen üblicherweise ein zangenförmiges Gehäuse mit zwei Gehäuseschenkeln und eine Gehäusebrücke zur biegesteifen Verbindung der Gehäuseschenkel mit einem definierten Abstand zueinander. In einem Zwischenraum (Abstand a) zwischen den Gehäuseschenkeln ist bei den Teilbelagscheibenbremsen immer ein Segment eines Rotors, mit anderen Worten ein Segment einer Bremsscheibe, zusammen mit den Bremsbelägen aufgenommen, die das Segment beaufschlagen. In den Gehäuseschenkeln sind zumeist hydraulisch oder elektromechanisch angetriebene Kolben in Kolbenbohrungen in Relation zur Bremsscheibe axial verschiebbar geführt aufgenommen. Weiterhin definieren Gehäuseschenkel und Gehäusebrücke einen, nach radial außen offenen, Schacht zum vereinfachten Austausch von Bremsbelägen. Zur Aufnahme von Umfangskräften verfügt der Schacht im Bereich vom Auslauf der Bremsscheibe über Anlageflächen für eine sogenannte gedrückte Anlage der Bremsbeläge. Wenn der Festsattel an einem Achsschenkel des Kraftfahrzeugs befestigt ist, wird es ermöglicht, eine Bremswirkung zu erzeugen, indem die Kolben mit definierter Normalkraft bevorzugt hydraulisch oder elektromechanisch in Richtung Reibflächen der Bremsscheibe verschoben werden, so dass erzeugte Reib- oder Umfangskräfte über die Bremsbeläge in das Gehäuse eingeleitet werden. Zur radialen Sicherung der Bremsbeläge dienen üblicherweise Stifte, die Bohrungen in den Bremsbelägen durchgreifen, und in Bohrungen vom Gehäuse gelagert sind. Dadurch wird vermieden, dass die Bremsbeläge ungewollt aus dem Schacht entfernt werden können. Zur Vermeidung von Klappergeräuschen kann eine Feder mit Federschenkeln vorgesehen sein, welche die Bremsbeläge mit elastischer Vorspannkraft permanent elastisch an einen Anschlag anlegt.

Die WO 92/17713 A beschreibt eine geräuscharme Festsattelbremsbacke, welche zwei sandwichartig axial aufeinander geschichtete Rückenplatten umfasst. Dabei ist die Reibmasse auf einer ersten Rückenplatte befestigt, um einen austauschbaren Verschleißteilklotz auszubildet. Die erste Rückenplatte ist lösbar an einer zweiten Rückenplatte befestigt, welche sich hinter der ersten Rückenplatte befindet, und über seitlich in Umfangsrichtung weisende Schenkel verfügt, die mit nach radial aussen offener Hakenform gebildet sind, und im Festsattel verbleibt, um die beim Bremsen auftretenden Umfangskräfte zu übertragen.

Der Erfindung liegt die Aufgabe zu Grunde, einen neuartigen Bremsbelag zum Einsatz in einer Festsattelbremse vorzuschlagen, welcher jeweils den derzeit vorliegenden Anforderungen insbesondere hinsichtlich erhöhter Festigkeit, verringerte Restbremsmomente, maximierte Bremsbelagfläche, reduziertes Gewicht, reduzierte Kosten und verbessertes Erscheinungsbild besser gerecht werden.

Zur Lösung des Problems wird ein Bremsbelag, mit der Merkmalskombination vom Patentanspruch 1 vorgeschlagen. Demnach betrifft die Erfindung einen Bremsbelag umfassend eine Rückenplatte auf der die Reibmasse befestigt ist, und wobei dieselbe Rückenplatte vom Bremsbelag zumindest einlaufsseitig mit einem Schenkel umfassend eine, nach radial außen offenen, Hakenform ausgebildet ist, und wobei die Rückenplatte zumindest teilweise zur formschlüssigen Aufnahme von einem Gehäuseabschnitt dient. Die nach radial außen weisende, offene Gestaltung der Schenkel zusammen mit einer primär gezogenen Beanspruchung der Rückenplatte und einer Kraftabstützung an der Gehäusebrücke ermöglicht weiterhin eine, im Geräuschverhalten (NVH) verbesserte, und gegen Korrosion sowie Verschmutzung geschützte Gestaltung. Weitere Einzelheiten der Erfindung gehen aus Unteransprüchen zusammen mit der Beschreibung anhand der Zeichnung hervor.

In der Zeichnung zeigt:

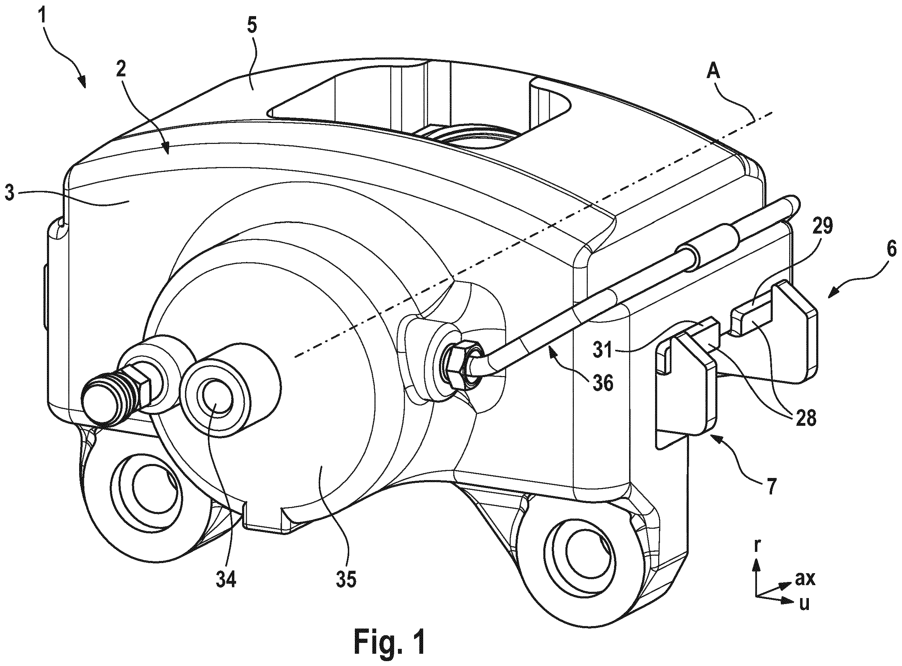

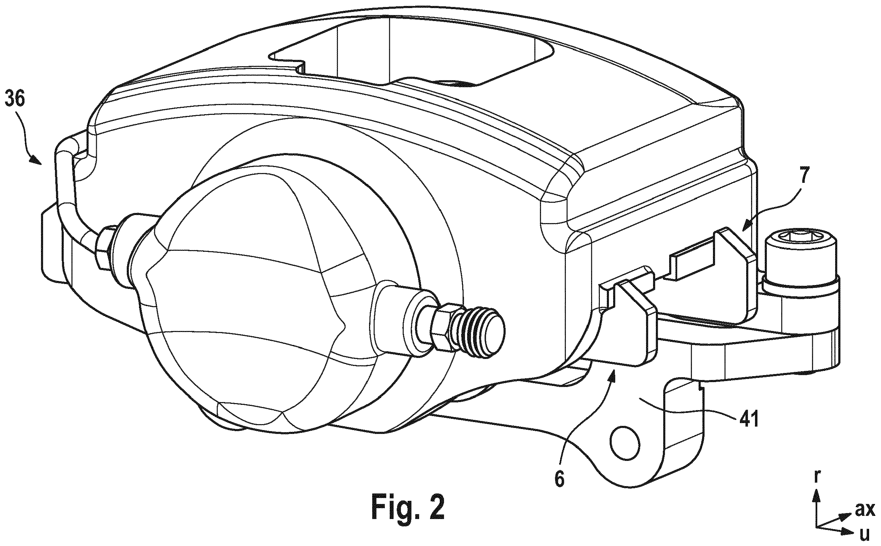

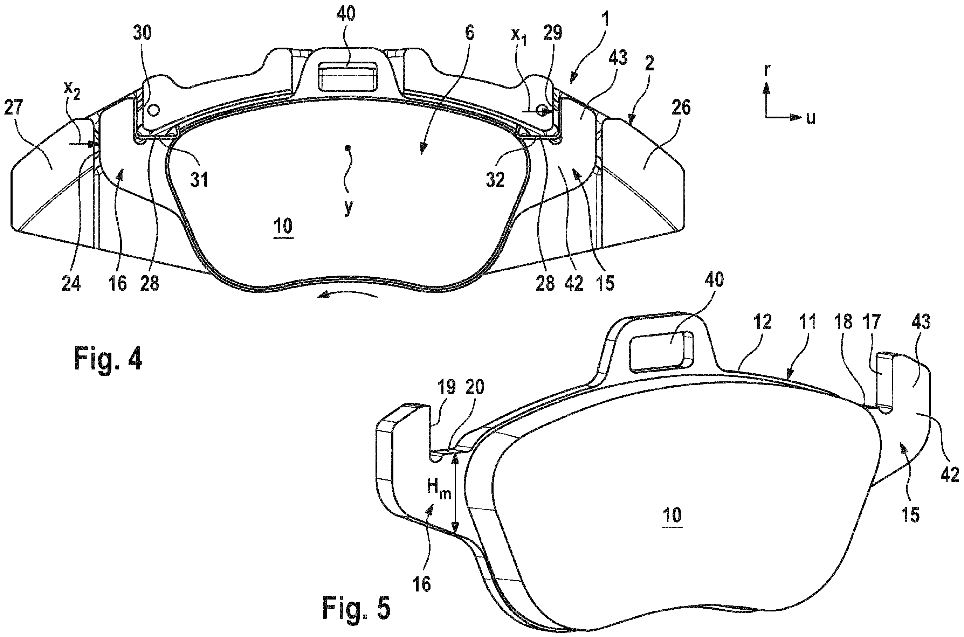

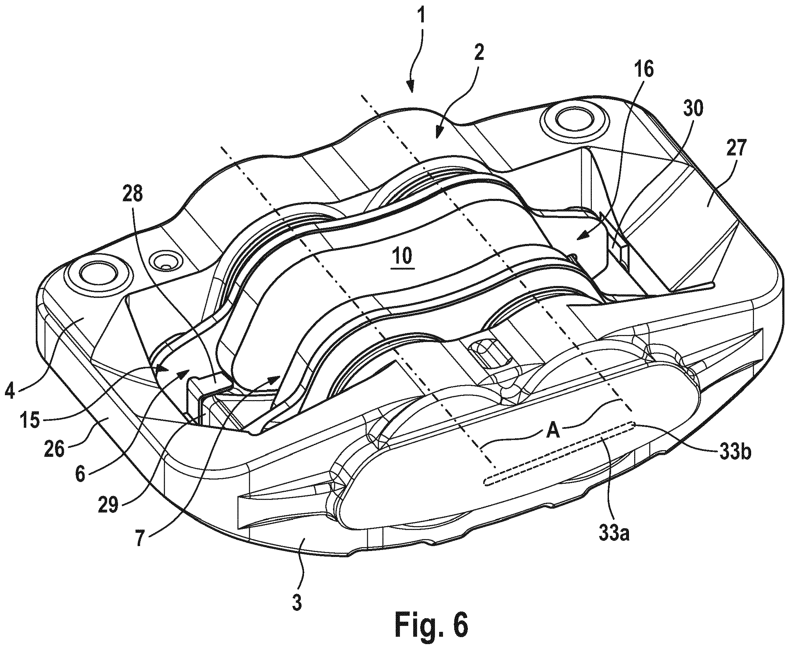

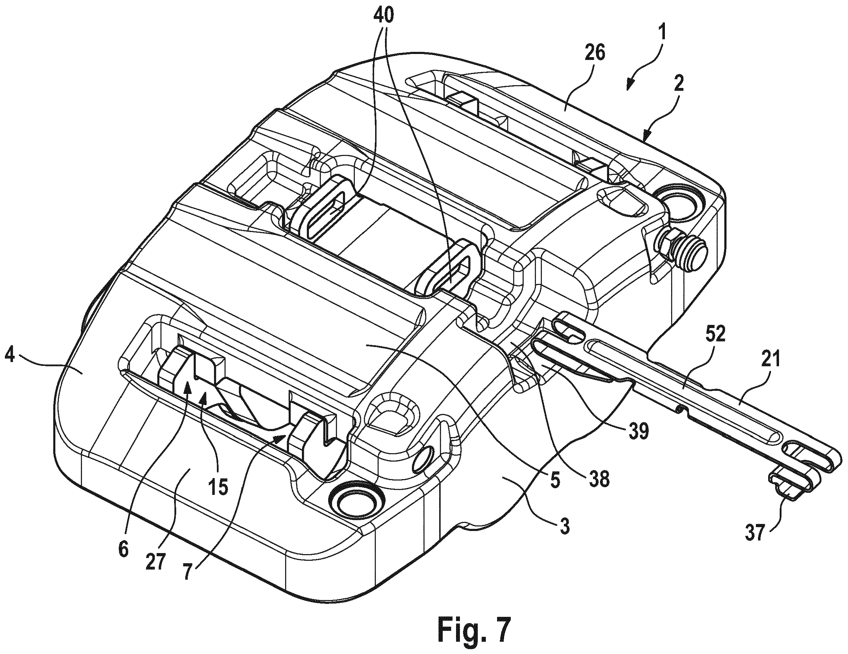

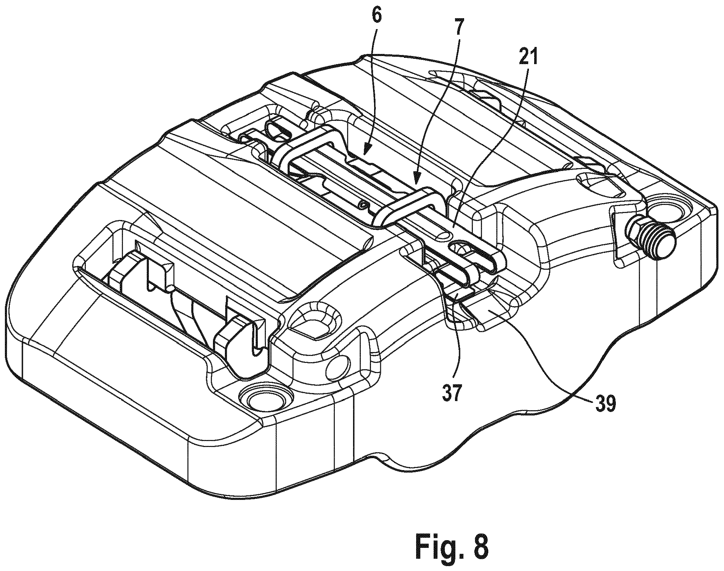

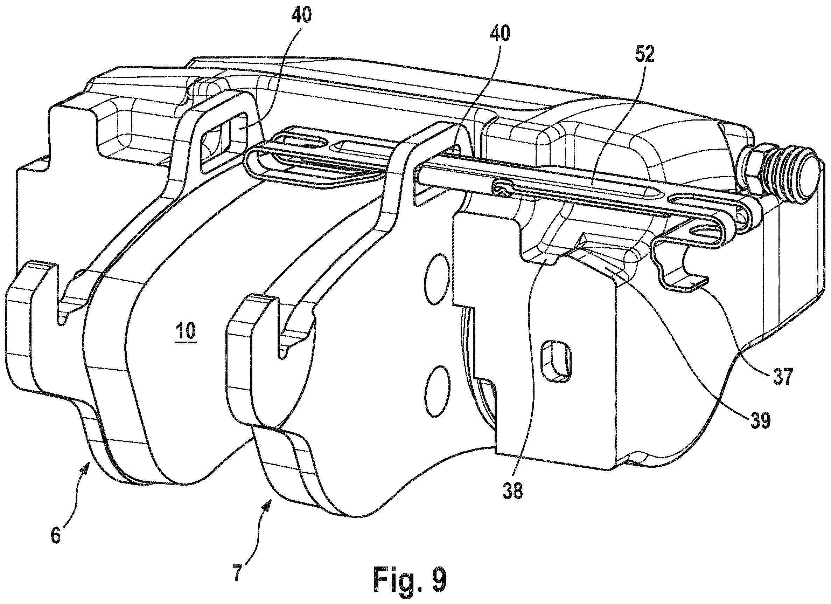

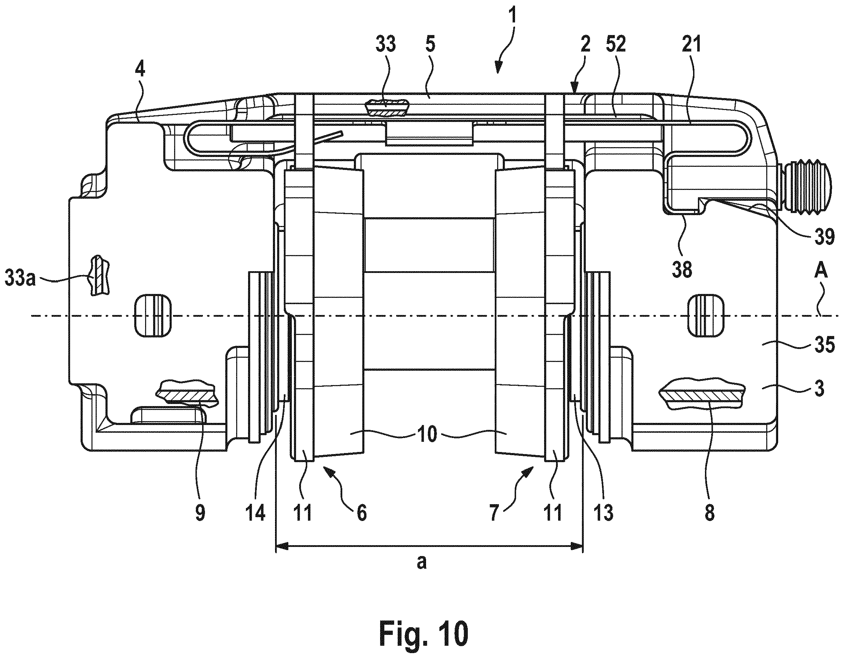

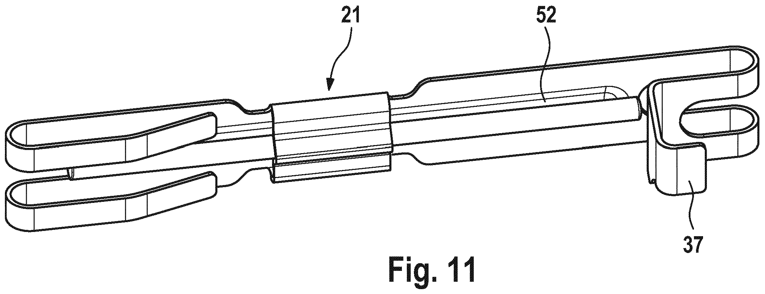

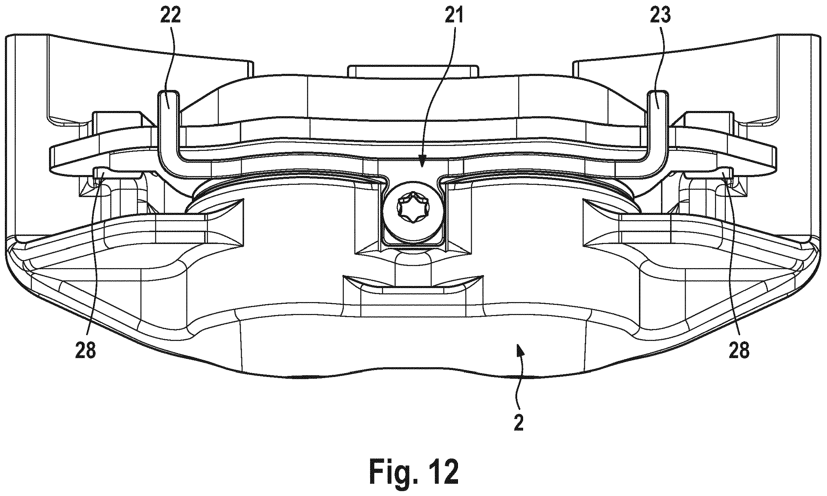

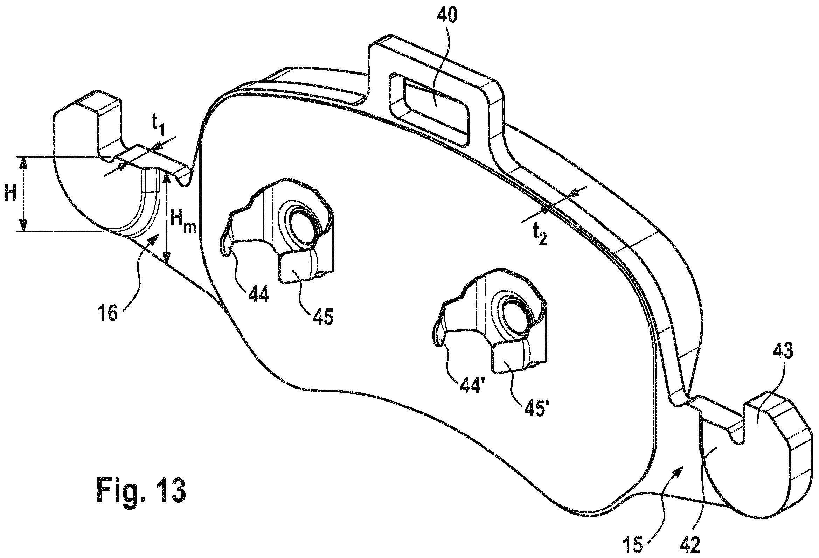

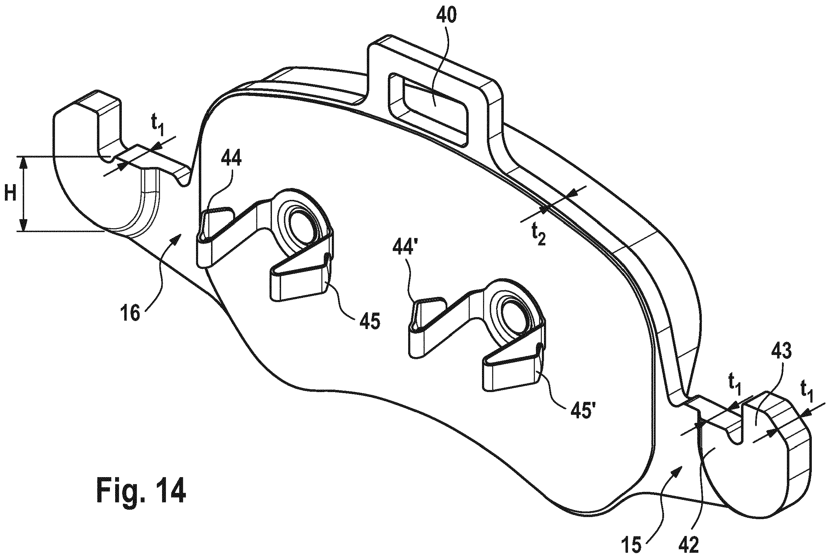

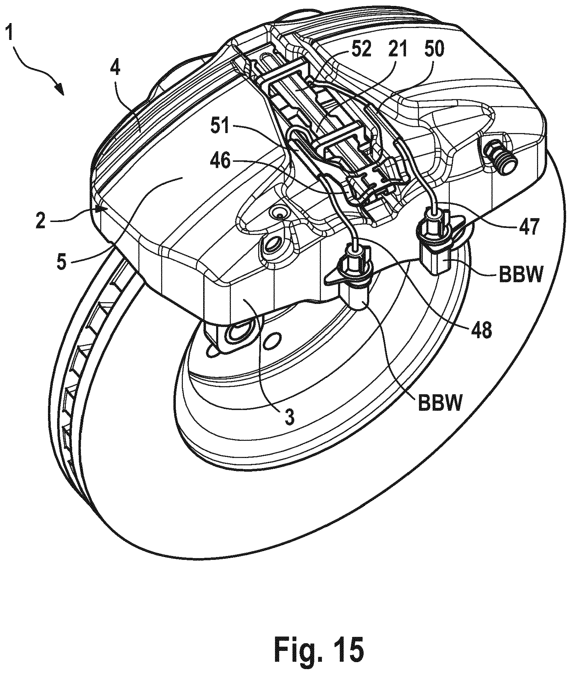

Fig. 1-17 Festsattelbremsen und deren Befederung zwecks Erläuterung, sowie erfindungsgemäße Bremsbeläge für Festsattelbremsen in jeweils unterschiedlichen Ausführungen sowie zeichnerischer Darstellung.

Eine Festsattelbremse 1 für ein Kraftfahrzeug ist an einem Achsschenkel eines Kraftfahrzeuges lösbar befestigbar, und umfasst ein einstückig ausgebildetes Gehäuse 2 (Monoblockgehäuse) mit zwei im Wesentlichen seitlich platzierten, zumindest auf einer Radseite im Wesentlichen vollständig geschlossen ausgebildeten, plateauförmigen Gehäuseschenkeln 3,4 und mit einer Gehäusebrücke 5, die die Gehäuseschenkel 3, 4 biegesteif mit definiertem Abstand a zueinander verbindet. Eine geschlossene, plane, Kontur der Gehäuseschenkel 3, 4 vermittelt eine besondere, ästhetisch geschlossene und harmomische Erscheinung, die insbesondere auch dafür geeignet ist, gestalterische Elemente wie insbesondere Herstellerembleme publikumswirksam aufzubringen. Die im Wesentlichen vollständig geschlossen ausgebildetete Gehäusebrücke 5 gewährleistet hohe Biegesteifigkeit und harmoniert mit einem geschlossenen Gesamterscheinungsbild der Gehäuseschenkel 3,4. Technische Wirkung (Festigkeit) und Ästhetik gehen eine optimierte Symbiose ein, wobei die Herstellung im Einzelnen weiter unten näher ausgeführt ist. Die weitgehend geschlossen - ohne Entnahmeöffnung für Bremsbeläge 6,7 - ausgebildete Gehäusebrücke 5 übergreift die Bremsbeläge 6,7 und eine nicht gezeigte Bremsscheibe in einem radial auswärtigen Bereich. In den Gehäuseschenkeln 3,4 sind Kolben 13, 14 in Bohrungen 8,9 entlang der Achse A axial verschiebbar aufgenommen. Des Weiteren sind die Bremsbeläge 6, 7 in dem Gehäuse 2 axial verschiebbar geführt aufgenommen. Umfangskräfte werden in Umfangsrichtung an dem Gehäuse 2 abgestützt. Jeder Bremsbelag 6,7 umfasst eine Reibmasse 10, die im Wesentlichen zentrisch auf einem Zentralabschnitt 12 einer Rückenplatte 11 befestigt ist. Jeder Bremsbelag 6,7 ist durch wenigstens einen der Kolben 13, 14 direkt betätigbar. Die Rückenplatte 11 verfügt über - im Wesentlichen gegenüberliegende und jeweils ausgehend von dem Zentralabschnitt 12 seitlich in Umfangsrichtung weisende - Schenkel 15, 16, die jeweils aus Schenkelabschnitten 42, 43 bestehen, die zur ziehenden Abstützung der Umfangskräfte am Gehäuse 2 dienen.

Zur Ermöglichung dieser sogenannten gezogenen (pull) Abstützung der Bremsbeläge 6,7 ist vorgesehen, dass jede Rückenplatte 11 einlaufseitig sowie formschlüssig in einem radial äußeren Bereich an einer plan bearbeiteten, definierten Anlagefläche 17, 18 der Gehäusebrücke 5 abgestützt ist, welche als Gegenkörper zur Krafteinleitung wirkt. Weiterhin ist definiert, dass jede Rückenplatte 11 eines Bremsbelags 6,7 einlaufseitig wenigstens einen hakenförmig nach radial außen weisenden Schenkel 15, 16 aufweist, der sich mit dem Schenkelabschnitt 42 zunächst in Umfangsrichtung u erstreckt, und danach mit dem Schenkelabschnitt 43 nach radial außen parallel zu der Anlagefläche 17, 18 von der Gehäusebrücke 5 gerichtet ist, um einen Abschnitt der Gehäusebrücke 5 radial radial außen aufzunehmen. Dadurch ist eine schmutz- und korrosionsgeschützte Anlage (in Hinblick auf abgeschleuderten Schmutz) für den gezogen abgestützten Bremsbelag 6, 7 gebildet. Jeder Schenkel 15, 16 kann insbesondere hammerkopfförmig ausgebildet sein, wobei eine Hammerkopfspitze nach radial außen weist. Idealerweise fluchtet ein idealer Angriffspunkt X der Krafteinleitung in das Gehäuse 2 mit einem Flächenschwerpunkt Y der Reibmasse 10 derart, dass der Bremsbelag 6,7 grundsätzlich keine Rotationstendenz aufweist, weil keinerlei Kräftepaar gebildet ist, so dass folglich keine parasitäre Drehwirkung erzeugt wird. Mit anderen Worten wird durch geometrische Platzierung und Bemessung der Rückenplatte 11, wie auch durch geometrische Formgebung der Reibmasse 10 in Relation zur ideal angenommenen Krafteinleitung an der Gehäusebrücke 5, eine Minimierung von Drehtendenzen ermöglicht. Falls auf Grundlage der geometrischen Verhältnisse ein gedachter Angriffspunkt X der Reibkräfte mit radialem Abstand zum Flächenschwerpunkt Y angeordnet ist, wird gewissermaßen ein Kräftepaar definiert, so dass der Bremsbelag 6,7 mit seinem auslaufseitigen Ende nach radial auswärts zu einer zusätzlichen Anlage an der Gehäusebrücke 5 tendiert. Für diesen Fall kommen parallel zur Umfangsrichtung u angeordnete Auflageflächen 19, 20 am Schenkel 15, 16 zum Tragen. Zur Ausbildung einer definierten, zusätzlich auslaufseitigen, Anlage der Bremsbeläge 6,7 - oder für eine fahrtrichtungsunabhängige Abstützung der Bremsbeläge 6,7 - dienen die jeweils auslaufseitig an der Rückenplatte 11 angeordneten zusätzlichen Schenkel. Alle Schenkel 15, 16 weisen zusätzlich zu einer Erstreckung in Umfangsrichtung u eine, zumindest nach radial auswärts gerichtete, Anlagefläche 17,18 auf.

Zur Vermeidung von Klappergeräuschen ist wenigstens ein gehäusefest anordbares Federelement 21 vorgesehen, welches die beiden Bremsbeläge 6,7 mit wenigstens einem Federarm 22,23 permanent elastisch beaufschlagt, so dass diese nach radial außen zur Anlage in deren Aufnahme im Gehäuse 2 gedrückt werden können. Einzelheiten und Alternativen sind weiter unten im Text erläutert.

Die vorstehend beschriebene Festsattelbremse 1 ist besonders für leichte Personenkraftwagen, für zusätzlich rekuperativ gebremste Kraftfahrzeuge, oder zum Einsatz im Bereich einer Hinterachse prädestiniert, weil diese Applikationen primär vergleichsweise geringe Bremsmomente, Umfangskräfte oder begrenzte ernergetische Umwandlung erfordern, oder wenn aus anderen Gründen eine rein einseitige (einlaufseitige) Kraftabstützung von Umfangskräften ausreichen kann.

Eine alternative Festsattelbremse 1 ermöglicht gesteigerte Energiewandlung und erhöhte Bremsmomente, oder herabgesetzte Flächenpressung an Angriffspunkten, indem der Kraftfluss aufgespalten wird, so dass zusätzliche Angriffspunkte X1,X2 genutzt werden können. Dadurch werden Kräfte nicht nur an einem einlaufseitigen Ende - gewissermaßen mit ausschließlich auf Zugkraft beanspruchter Rückenplatte 11 - eingeleitet, sondern es wird für besonders hohe Bremsmomente zusätzlich eine gewissermaßen gedrückte (push) Abstützung der Rückenplatte 11 ermöglicht. Dabei kann jede Rückenplatte 11 quasi-elastisch ausgebildet sein, und am jeweils auslaufseitigen Schenkel eine zusätzliche Anlagefläche 24,25 derart aufweisen, das zumindest für hohe Beanspruchungen ein zusätzlicher Angriffspunkt X2 zur Einleitung von Reibkräften (Umfangskräften) an einer rahmenartigen Erweiterung 26,27 der Gehäusebrücke 5 vorgesehen ist. Dadurch ist der Kraftfluss gewissermaßen aufgeteilt, wobei ein erster Kraftanteil am Angriffspunkt X1 einlaufseitig an einer Anschlagfläche 29 eingeleitet werden kann, und wobei ein zusätzlicher Kraftanteil, insbesondere bei hohen Umfangskräften, auslaufseitig am Angriffspunkt x2 in eine Anschlagfläche 30 eingeleitet werden kann. Je nach Bemessung einer Tolerierung zwischen Anlageflächen 17,18;24,25 an Rückenplatte 11 und der zugeordneten Anschlagflächen 29,30 am Gehäuse 2 kann die Abstützung graduell unterschiedlich arrangiert sein (pull-Abstützung und zusätzlich push-Abstützung beginnend mit geringen Umfangskräften oder pull-Abstützung bei geringen Umfangskräften und zusätzlich push-Abstützung ab erhöhten Umfangskräften). Eine kostengünstige Bearbeitung radial verlaufender Anschlagflächen 29,30,31,32 vom Gehäuse 2 sieht vor, dass ein einziges Werkzeug (Fräser oder Räumprofil) derart ausgebildet und dimensioniert ist, und wobei das Werkzeug so durch die Erweiterung 26, 27 vom Gehäuse 2 geführt wird, dass zwei gegenüber liegende Anschlagflächen 29,31;30,32 mit einer Werkzeug-Vorschubbewegung gleichzeitig spanend bearbeitet werden können.

Ganz prinzipiell ist es möglich, dass die Umfangskräfte von der Rückenplatte 11 unmittelbar direkt in die beteiligten Angriffspunkte x1, x2 der Gehäusebrücke 5 eingeleitet werden. Es kann aus verschiedenen Gründen jedoch vorteilhaft sein, diese Krafteinleitung mittelbar durch Zwischenlage einer Armierung 28 zu gestalten, indem beispielsweise ein vergleichsweise dünnes Blech aus nichtrostendem, hochlegiertem Stahlblechwerkstoff auf die Abstützfläche aufgelegt ist. Denn dadurch wird eine Möglichkeit geschaffen, auf die Kontaktkraft- und Reibverhältnisse zwischen Rückenplatte 11 (Werkstoff Stahlblech) und Gehäusebrücke 5 vom Festsattel (Gusswerkstoff wie insbesondere Grau- oder Stahlguss beziehungsweise gegossener Leichmetallwerkstoff) Einfluss zu nehmen, und unmittelbar direkten Kontakt der Partner zu vermeiden. Weiterhin kann ein Korrosionsverhalten oder eine Unempfindlichkeit gegen Verschmutzung günstig beeinflusst sein. Eine besonders günstige Gestaltung ist gegeben, wenn das Gehäuse 2 vom Festsattel aus Leichtwerkstoff einstückig urgeformt - also gegossen - in einem Sandgussverfahren oder in einem Kokillengussverfahren ausgebildet ist, und wobei die Bohrung 8, 9 durch geeignete Maßnahmen in die Gehäuseschenkel 3,4 spanend eingebracht sind, indem ein Werkzeug zwischen die Gehäuseschenkel 3,4 in den Zwischenraum eingeführt wird, welcher nach vollständiger Montage von dem Festsattel die Bremsbeläge 6, 7 und die Bremsscheibe aufnimmt. In diesem Zusammenhang ist es auch vorteilhaft, wenn sämtliche Bohrungen 8,9 jeweils zueinander fluchtend und präzise zueinander gegenüberliegend in den Gehäuseschenkeln 3,4 angeordnet sind, und wobei der definierte Abstand zwischen den Gehäuseschenkeln 3,4 zumindest geringfügig größer als die Länge von einem Kolben 13, 14 ausgebildet ist, so dass sowohl die spanende Herstellung der Bohrungen 8, 9 als auch die Montage der Kolben 13, 14 über den Zwischenraum erfolgt. Durch diese Gestaltung wird es ermöglicht, dass auf eine mehrstückig-geschraubte Gestaltung von dem Festsattel verzichtet werden kann. Bei den hydraulisch betätigten Varianten einer Festsattelbremse 1 können weitere Bearbeitungsschritte darin bestehen, zusätzliche hydraulische Verbindungsbohrungen 33 oder Anschlüsse 34 vorzusehen. Dies betrifft insbesondere eine oder mehrere Entlüftungsbohrungen für einen oder mehrere hydraulische Druckräume 35, sowie die Erstellung eines oder mehrerer Verbindungsbohrungen 33 zwischen verschiedenen hydraulischen Druckräumen 35. Immer wenn ein Gehäuseschenkel 3,4 mehrere Bohrungen 8,9 aufweist, sind derartige Verbindungsbohrungen zwischen hydraulischen Druckräumen 35 notwendig.

Eine weitere zwingend nötige Maßnahme bei den Festsattelbremsen 1 besteht darin, wenigstens eine hydraulische Verbindung 36 zwischen gegenüber liegenden hydraulischen Druckräumen 35 in den gegenüber liegenden Gehäuseschenkeln vorzusehen. Diese hydraulische Verbindung 36 kann intern, also ausgehend von einem Druckraum 35 in einem Gehäuseschenkel 3,4, oder ausgehend von einer Verbindungsbohrung 33 zwischen Druckräumen 35 in diesem Gehäuseschenkel 3,4, durch die Gehäusebrücke 5 hindurch bis zu einem hydraulischen Druckraum 33 a in dem gegenüberliegend angeordneten Gehäuseschenkel 3,4, oder zu einer Verbindungsbohrung 33a zwischen Druckräumen 33a,33b in diesem Gehäuseschenkel, geführt sein, so dass die hydraulische Leitungsführung vollständig integriert vorgesehen ist. Soweit eine unmittelbare Punkt-zu-Punkt Verbindung durch eine geometrische Form-Gestaltung der Festsattelbremse 1 jedoch nicht machbar ist, kann es sinnvoll und notwendig sein, die Verbindungsbohrungen aus mehreren Bohrungabschnitten segmentiert aufzubauen, und wobei die Bohrungsabschnitte im Winkel zueinander ausgerichtet sind. Weil für die Herstellung der betreffenden Bohrungsabschnitte zumindest unerwünschte Werkzeug-Eintrittsöffnungen und gegebenenfalls auch unerwünschte Werkzeug-Austrittsöffnungen in dem Gehäuse verbleiben, kann es vorgesehen sein, dass diese nach der Bohrungserstellung, Bohrungsreinigung und/oder Oberflächenbehandlung mit einem Verschlussmittel versehen sind. Im bevorzugten Fall sind die Verschlussmittel als Kugeln ausgebildet, deren Durchmesser geringfügig größer als der Bohrungsdurchmesser dimensioniert ist, so dass durch das Einpressen der Kugeln ein hydraulisch dichter Verschluss der Werkzeug-Eintrittsöffnungen und Werkzeug-Austrittsöffnungen erzeugt wird. Es kann auch vorgesehen sein, die Verschlussmittel, insbesondere Kugeln alternativ oder zusätzlich zum Einpressen mit dem Gehäusewerkstoff zu verstemmen, wobei beispielsweise mehrere am Umfang regelmäßig verteilte Krafteinleitungsstellen vorgesehen sind, die durch Pressmarken am Produkt visuell ersichtlich sind.

Alternativ zu einer vollständig integrierten Leitungsführung kann eine äußerlich angebaute, konventionelle Rohrleitungsverbindung zwischen den Gehäuseschenkeln 3,4 vorgesehen sein, die einen verringerten Zerspanungsaufwand ermöglicht. Mischformen sind denkbar, indem beispielsweise die Druckräume 35 in einem Gehäuseschenkel 3,4 durch interne Verbindungsbohrungen verbunden sind, und wobei die beiden Gehäuseschenkel 3,4 durch eine angebaute Rohrleitungsverbindung versorgt sind.

Obwohl die elektromechanischen Radbremsen prinzipiell eine völlig andere Wirkenergie umfassen, erfolgt die elektrische Energieversorgung anhand elektrischer Leitungsführung prinzipiell analog zur hydraulischen Wirkenergieversorgung - wie oben beschrieben.

Wie erläutert wurde, greift ein Bremsbelag 6,7 von radial innen an der Gehäusebrücke von der Festsattelbremse 1 an, so dass eine entsprechende Führung und Verliersicherung in Richtung radial außen vorliegt. In Richtung radial innen verhindert üblicherweise ein konstruktiv gegebener Bremsscheibentopf (Radnabe) ein Herausfallen der Bremsbeläge 6,7, so dass dadurch eine konstruktive, formschlüssig wirksame, und auch ausfallsichere Verliersicherung gegeben ist. Ein Wechsel der Bremsbeläge 6,7 wird vorgenommen, indem der Bremssattel von dem Achsschenkel demontiert wird, und wobei die Bremsbeläge 6,7 aus dem Gehäuse 2 entnommen werden, nachdem das Federelement 21 entfernt ist.

Gemäß den verschiedenen Ausführungsformen der Erfindung ist die Befederung jeweils so ausgelegt, dass die Bremsbeläge 6,7 permanent elastisch nach radial außen in die Führung gezogen oder gedrückt werden. Das wenigstens eine, elastisch vorgespannte Federelement 21 ist zwischen Kolben 13, 14 und/ oder Gehäuse 2 und Bremsbelägen 6,7 vorgesehen, und beaufschlagt zumindest einen oder beide Bremsbeläge 6,7 nach radial außen in Richtung Gehäusebrücke 5.

In diesem Zusammenhang sind im Einzelnen mehrere alternative Varianten einer Befederung grundsätzlich möglicht:
a) Federelement(e) 21 an Rückenplatte 11 von einem oder beiden Bremsbelägen 6,7 integriert befestigt vorgesehen - beispielsweise durch Eingriff in einen napfförmigen Kolben 13, 14
b) Federelement(e) 21 für beide Bremsbeläge 6,7 am Gehäuse 2 integriert befestigt vorgesehen

Bei den bremsbelagintegrierten Ausführungsformen (Typ a)) bietet sich eine Bauform an, die darin besteht, dass die Rückenplatte 11 zumindest einen Federschenkel 39 zum Eingriff in einen napfförmigen Kolben 13, 14 aufweist, und wobei die Federwirkung nach radial auswärts gerichtet ist.

Bei einer anderen bevorzugten Lösung (Typ b)) ist ein Federelement 21 am Gehäuse 2 radial innen, im Bereich von einem Bremsscheibentopf angeordnet, und drückt die Bremsbeläge 6,7 nach radial außen in deren Führung. Das Federelement 21 kann insbesondere lösbar befestigbar vorgesehen sein. Rein beispielsweise erfolgt eine Verschraubung vom Federelement 21 am Gehäuse 2.

Ein Federelement 21 kann aus Stahldraht oder aus einem ebenen Stahlblech im Wesentlichen spanlos umgeformt hergestellt sein und ein entsprechendes Blechdesign mit axial gerichtet, rippenförmiger Verstärkung 52 aufweisen. Zur Befestigung vom Federelement 21 eignet sich besonders eine Schraub- oder Rastanordnung am Gehäuse 2, wobei exemplarisch wenigstens ein Verriegelungsabschnitt 37 vom Federelement 21 auf einer zugeordneten Führung 39 gleitet, und dadurch automatisch mit einer axial gerichteten Einführbewegung formschlüssig in oder hinter wenigstens eine Ausnehmung oder Hinterschneidung 38 vom Gehäuse 2 eingreifen kann, so dass eine axial gerichtete Montage von dem Federelement 21 ermöglicht ist. Die Montage erfolgt, indem die Bremsbeläge 6, 7 in das Gehäuse 2 eingelegt werden, und danach das Federelement 21 parallel zur Axialrichtung ax durch eine Öffnung 40 der Rückenplatte 11 eingeschoben wird, bevor die Montage vom Gehäuse 2 am Kraftfahrzeug erfolgt.

Das Gehäuse 2 weist wenigstens eine Ausnehmung, bevorzugt eine integrierte Montage-, Schnapp- oder Rastbefestigung für eine formschlüssige Aufnahme von einem Verriegelungsabschnitt 37 vom Federelement 21 auf. Im Anschluss an eine integrierte Führung 39 schnappt der Verriegelungsabschnitt 37 nach reversibel-elastischer Deformation elastisch-formschlüssig in eine Hinterschneidung 38 von dem Gehäuse 2 ein. Dadurch ist das Federelement 21 am Gehäuse 2 fixiert angeordnet.

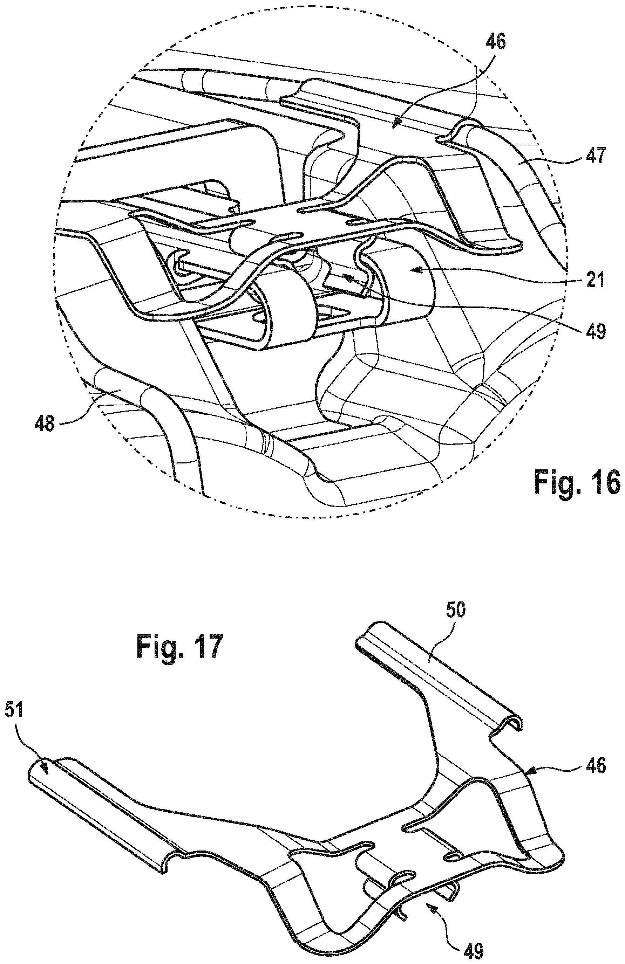

Das Federelement 21 kann insbesondere durch ein Bauteil nach Fig. 17 zusammen mit den folgenden Merkmalen zusätzliche Aufgaben übernehmen. Indem das Federelement 21 als Träger zur Befestigung von einem Halteelement 46 ausgebildet ist, kann es zusätzlich dazu dienen, wenigstens ein anderes Bauteil zu tragen. Beispielsweise kann das Halteelement 46 Schenkel 50,51 aufweisen, die einen oder mehrere Leiter 47,48 von Bremsbelagverschleiß-Warnvorrichtungen BBW (Warnkontakte) derart elastisch am Gehäuse 2 fixieren, dass diese Leiter 47,48 beispielsweise im Bereich einer sichtbaren Front- oder Brückenfläche vom Gehäuse 2 optisch ansprechend sowie preisgünstig am Gehäuse 2 geführt, und gegen Abrieb, Beschädigung etc. gesichert angeordnet sind. Des Weiteren kann durch die erfindungsgemäße einfache Maßnahme ein unbeabsichtigtes Abziehen einer etwaigen Steckverbindung sicher verhindert werden. Gesonderter Aufwand für ein bekanntes, rohrförmiges Bauteil wie in der EP 602 866 B1 ist nicht erforderlich. Erfindungsgemäß verfügt das balkenförmige, parallel zur Axialrichtung ax verlaufende Federelement 21 über eine Mehrfachfunktion. Es entfallen weiterhin gesonderte Befestigungsmittel zwischen Halteelement 46 und Gehäuse 2. Die Erfindung eignet sich dadurch insbesondere vorteilhaft für Lösungen, bei denen an jeder Radbremse, jeweils zu beiden Seiten einer Bremsscheibe, jeweils wenigstens ein gesonderter Warnkontakt zur Überwachung des Verschleisszustands einer Reibmasse 10 platziert ist. Zwischen Federelement 21 und Halteelement 46 kann wenigstens eine elastische Rastvorrichtung 49 vorgesehen sein, die mit Vorteil mehrere Arme aufweist, welche zur lösbaren Befestigung vom Halteelement 46 dienen. Bevorzugt ist die Befestigung so gelöst, dass das Halteelement 46 in eine Ausnehmung vom Federelement 21 eingreift.

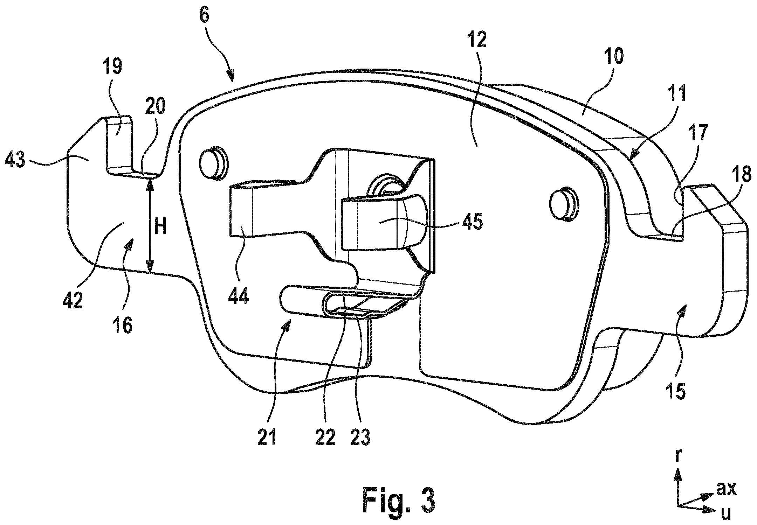

Die Bremsbeläge 6,7 können nach den Figuren 3, 4, 5, 13, 14 kombinatorisch mit sämtlichen genannten Merkmalen, oder jeweils für sich mit den folgenden Merkmalen, versehen sein. Zumindest einer der Schenkelabschnitte 42, 43 der Rückenplatte 11 kann eine Dicke t1 aufweist, die größer ausgebildet ist, als eine Dicke t2 von dem Zentralabschnitt 12 der Rückenplatte 11. Weil die Platzierung der Verdickung t1 einen Zug-Spannungsquerschnitt im Wesentlichen über dessen gesamte Höhe H im Bereich der herrschenden Zugspannungen erhöht, wird eine verbesserte, kerbwirkungsreduzierte Zugspannungseinleitung in die Schenkelabschnitte 42,43 ermöglicht. Erfindungsgemäß ist durch zumindest einen Kaltumformvorgang der Rückenplatte 11 das Problem gelöst, ein zusätzliches Werkstoffvolumen für die Erstellung der Verdickung in dem freien Spannungsquerschnitt der Schenkelabschnitte 42,43 zuzuführen. Das System unterscheidet sich dadurch hinreichend von dem Grundgedanken einer bekannten, im Wesentlichen nur partiell im Bereich einer Auflagefläche verdickt ausgebildet dargestellten, hammerkopfförmigen Rückenplatte für einen Schwimmsattel nach der EP 1 217 247 B1, wobei das freie Ende im Wesentlichen randseitig im Bereich einer Auflage vom Gegenkörper (Halter) verdickt ausgebildet ist, um primär eine vergrößerte Auflagefläche für den Gegenkörper auszubilden, so dass Flächenpressung im Bereich dieser Auflage reduziert ist.

Für alle Ausführungsformen vom Gehäuse 2 der Festsattelbremse 1 gilt prinzipiell, dass eine Befestigung zwischen nicht gezeigtem Achsschenkel und Gehäuse 2 unter gegenseitiger Anpassung der Schnittstelle mit Hilfe von radial gerichteten Befestigungsmitteln (Schrauben) oder mit Hilfe von axial gerichteten Befestigungsmitteln (Schrauben) oder einer Mischform dieser Varianten erfolgen kann, und wobei die Befestigungsmittel durch entsprechend ausgerichtete Befestigungslöcher am Gehäuse 2 geführt sind. Prinzipiell ist es zur Applikation oder Adaption an unterschiedliche Kraftfahrzeugeinbausituationen jedoch denkbar, einen Schnittstellen-Baukasten derart vorzusehen, dass das Gehäuse 2 prinzipiell nur Befestigungslöcher für die radial ausgerichteten Befestigungsmittel aufweist, und dass einem derartigen "Standard" Gehäuse ein gesondertes Anbauteil 41 (Adapter) zugeordnet ist, um mit geringem Aufwand eine Adaption an Kraftfahrzeuge mit einer axial gerichteten Befestigungsschnittstelle zu ermöglichen, oder umgekehrt. Durch das Anbauteil 41 werden zusätzliche Kosten für eine Herstellung mehrerer Gehäuse-Gußformen in optisch vertretbarer Weise eingespart, und Standardisierung wird gefördert. Dadurch ergeben sich Vorteile im Rahmen einer Rationalisierung einer mechanischen Fertigung.

### Bezugszeichenliste

- 1: Festsattelbremse
- 2: Gehäuse
- 3,4: Gehäuseschenkel
- 5: Gehäusebrücke
- 6,7: Bremsbelag
- 8,9: Bohrung
- 10: Reibmasse
- 11: Rückenplatte
- 12: Zentralabschnitt
- 13,14: Kolben
- 15,16: Schenkel
- 17-20: Anlagefläche
- 21: Federelement
- 22,23: Federarm
- 24,25: Anlagefläche
- 26,27: Erweiterung
- 28: Armierung
- 29-32: Anschlagfläche
- 33: Verbindungsbohrung
- 34: Anschluss
- 35: Druckraum
- 36: Verbindung
- 37: Verriegelungsabschnitt
- 38: Hinterschneidung
- 39: Führung
- 40: Öffnung
- 41: Anbauteil
- 42,43: Schenkelabschnitt
- 44,45: Federschenkel
- 46: Halteelement
- 47: Leiter
- 48: Leiter
- 49: Rastvorrichtung
- 50: Schenkel
- 51: Schenkel
- 52: Verstärkung

- a: Abstand
- A: Achse
- H: Höhe / Hm mittlere Höhe
- ax: Axialrichtung
- u: Umfangsrichtung
- r: Radialrichtung
- t1,t2: Dicke
- x, x1, x2: Angriffspunkt
- Y: Flächenschwerpunkt
- BBW: Bremsbelagverschleiß-Warnvorrichtung (Warnkontakt)

## Patentansprüche

1. Bremsbelag für eine Festsattelbremse (1), umfassend eine Rückenplatte (11) und eine Reibmasse (10), die auf einem Zentralabschnitt (12) der Rückenplatte (11) appliziert ist, der Zentralabschnitt (12) einen, nach radial außen weisenden, Abschnitt mit einer Öffnung (40) zur Aufnahme vom Federelement (21), oder zur Aufnahme von einem Federschenkel, aufweist, wobei die Rückenplatte (11) im Wesentlichen gegenüberliegende, und jeweils seitlich in Umfangsrichtung weisende, Schenkel (15,16) zur Abstützung von Umfangskräften an einem Gegenkörper aufweist, jeder einlaufseitige Schenkel (15, 16) mit einer, nach radial außen offenen, Hakenform ausgebildet ist, und wenigstens teilweise zur formschlüssigen Anlage am Gegenkörper dient, die Hakenform ausgehend von dem Zentralabschnitt (12) zwei im Wesentlichen rechtwinklig zueinander angeordnete, aneinander anschließende, Schenkelabschnitte (42,43) aufweist, und zumindest einer der Schenkelabschnitte (42,43) eine Dicke (t1) aufweist, die größer als eine Dicke (t2) von dem Zentralabschnitt (12) der Rückenplatte (11) vorgesehen ist.

2. Bremsbelag für eine Festsattelbremse (1) nach Anspruch 1, **dadurch gekennzeichnet, dass** jeder auslaufseitige Schenkel (15, 16) mit einer, nach radial außen offenen, Hakenform ausgebildet ist.

3. Bremsbelag für eine Festsattelbremse (1) nach Anspruch 1, **dadurch gekennzeichnet, dass** die Rückenplatte (11) zumindest einen Federschenkel (44,45) aufweist.

4. Bremsbelag für eine Festsattelbremse (1) nach Anspruch 1, **dadurch gekennzeichnet, dass** die Dicke (t1) zur Spannungsreduktion im Wesentlichen vollständig, über eine Höhe (H) von dem Schenkelabschnitt (42) vorgesehen ist.

5. Bremsbelag für eine Festsattelbremse (1) nach Anspruch 1, **dadurch gekennzeichnet, dass** zusätzlich eine gedrückte Abstützung der Rückenplatte (11) vorliegt, indem jede Rückenplatte (11) quasi-elastisch ausgebildet ist, und am jeweils auslaufseitigen Schenkel eine zusätzliche Anlagefläche (24,25) aufweist, um einen zusätzlichen Angriffspunkt X2 zur Einleitung von Umfangskräften aufzuweisen.

## Claims

1. Brake pad for a fixed caliper brake (1), comprising a back plate (11) and a friction compound (10) which is applied to a central section (12) of the back plate (11), the central section (12) having a section, facing radially outwards, with an opening (40) for receiving the spring element (21), or for receiving a spring arm, the back plate (11) having arms (15, 16) disposed substantially opposite one another and in each case oriented laterally in the circumferential direction for supporting circumferential forces against a bracing element, each arm (15, 16) on the run-in side being configured with a hook shape which is open on the radially outer side and serving at least partially for form-fitting abutment against the bracing element, the hook shape comprising, starting from the central section (12), two arm sections (42, 43) arranged substantially at right angles to one another and adjoining one another, and at least one of the arm sections (42, 43) having a thickness (t1) which is greater than a thickness (t2) of the central section (12) of the back plate (11).

2. Brake pad for a fixed caliper brake (1) according to Claim 1, **characterized in that** each arm (15, 16) on the run-out side is configured with a hook shape which is open on the radially outer side.

3. Brake pad for a fixed caliper brake (1) according to Claim 1, **characterized in that** the back plate (11) has at least one spring arm (44, 45).

4. Brake pad for a fixed caliper brake (1) according to Claim 1, **characterized in that** the thickness (t1) is provided for stress reduction substantially completely over a height (H) of the arm section (42).

5. Brake pad for a fixed caliper brake (1) according to Claim 1, **characterized in that** push support of the back plate (11) is additionally present **in that** each back plate (11) has a quasi-elastic configuration and has an additional abutment face (24, 25) on the respective arm on the run-out side in order to have an additional point of application X2 to transmit circumferential forces.

## Revendications

1. Garniture de frein pour un frein à étrier (1), comprenant une plaque dorsale (11) et une masse de friction (10), qui est appliquée sur une partie centrale (12) de la plaque dorsale (11), la partie centrale (12) présente une partie orientée radialement vers l'extérieur avec une ouverture (40) destinée à recevoir l'élément de ressort (21) ou destinée à recevoir une branche de ressort, dans laquelle la plaque dorsale (11) présente des branches (15, 16) essentiellement opposées et orientées chacune latéralement en direction périphérique, pour supporter des forces périphériques sur un corps opposé, chaque branche côté entrée (15, 16) est réalisée avec une forme de crochet ouverte radialement vers l'extérieur, et sert au moins en partie pour l'appui par emboîtement sur le corps opposé, la forme de crochet présente à partir de la partie centrale (12) deux parties de branche (42, 43) reliées l'une à l'autre disposées essentiellement à angle droit l'une par rapport à l'autre, et au moins une des parties de branche (42, 43) présente une épaisseur (t1), qui est prévue plus grande qu'une épaisseur (t2) de la partie centrale (12) de la plaque dorsale (11).

2. Garniture de frein pour un frein à étrier (1) selon la revendication 1, **caractérisée en ce que** chaque branche côté sortie (15, 16) est réalisée avec une forme de crochet ouverte radialement vers l'extérieur.

3. Garniture de frein pour un frein à étrier (1) selon la revendication 1, **caractérisée en ce que** la plaque dorsale (11) présente au moins une branche de ressort (44, 45).

4. Garniture de frein pour un frein à étrier (1) selon la revendication 1, **caractérisée en ce que** l'épaisseur (t1) est prévue pour la réduction des contraintes essentiellement entièrement sur une hauteur (H) de la partie de branche (42).

5. Garniture de frein pour un frein à étrier (1) selon la revendication 1, **caractérisée en ce qu'**il se trouve en outre un support appuyé de la plaque dorsale (11), du fait que chaque plaque dorsale (11) est quasi-élastique, et présente respectivement à la branche côté sortie une face d'application supplémentaire (24, 25), afin de présenter un point d'attaque supplémentaire X2 pour l'introduction de forces périphériques.
